# EUROPÄISCHE PATENTANMELDUNG

(11) **EP 4 394 139 A2**
(43) Veröffentlichungstag der Anmeldung: **03.07.2024**
(21) Anmeldenummer: 24176711.0
(22) Anmeldetag: 07.12.2021
(51) Int. Cl.: E03C 1/044

(54) **SANITÄRARMATURVORRICHTUNG, SANITÄRSYSTEM SOWIE VERFAHREN ZUM BETREIBEN EINER SANITÄRARMATURVORRICHTUNG**

(30) Priorität: 07.12.2020 DE 102020215446; 20.04.2021 DE 102021203934
(62) Teilanmeldung aus: 21830600.9
(71) Anmelder: BLANCO GmbH + Co KG, 75038 Oberderdingen (DE)
(72) Erfinder: Tack, Tobias, 75038 Oberderdingen (DE); Funke, Thomas, 75031 Eppingen (DE); Späth, Dennis, 75038 Oberderdingen (DE); Hamann, Mirko, 74363 Güglingen (DE); Keller, Hartmut, 76356 Weingarten (DE)
(74) Vertreter: Ullrich & Naumann PartG mbB

(57) **Zusammenfassung**

Die Erfindung betrifft eine Sanitärarmaturvorrichtung, umfassend
eine Sanitärarmatur zur Abgabe eines Fluids,
eine Aufbereitungseinrichtung zum Bereitstellen von zumindest einer Art aufbereiteten Fluids, wobei die Aufbereitungseinrichtung ein oder mehrere Aufbereitungskomponenten aufweist, und
eine zentrale Verteilungseinrichtung, welche zumindest mit der Aufbereitungseinrichtung verbunden ist, umfassend
eine Fluidverteilungskomponente zur Verteilung von Fluid an zumindest eines der Aufbereitungskomponenten der Aufbereitungseinrichtung.

## Beschreibung

Die Erfindung betrifft eine Sanitärarmaturvorrichtung, umfassend eine Sanitärarmatur zur Abgabe eines Fluids und eine Aufbereitungseinrichtung zum Bereitstellen von zumindest einer Art aufbereiteten Fluids, wobei die Aufbereitungseinrichtung ein oder mehrere Aufbereitungskomponenten aufweist.

Die Erfindung betrifft weiter ein Sanitärsystem mit einer Sanitärarmaturvorrichtung.

Die Erfindung betrifft weiter ein Verfahren zum Betreiben einer Sanitärarmaturvorrichtung.

Obwohl die vorliegende Erfindung allgemein auf beliebige Fluide anwendbar ist, wird die vorliegende Erfindung in Bezug auf Wasser als Fluid erläutert.

Sanitärarmaturen sind in vielfältigster Weise bekannt geworden. Bekannte Sanitärarmaturen weisen beispielsweise einen Armaturenkörper mit zumindest einem Stellglied zur Einstellung zumindest einer Eigenschaft eines durch die Sanitärarmatur geleiteten Fluidstroms auf. Bei der Eigenschaft kann es sich beispielsweise um die Durchflussmenge des Fluidstroms oder die Temperatur des Fluidstroms handeln. Bei bekannten Sanitärarmaturen wird der Fluidstrom beispielsweise aus einem getrennten Kaltwasser- und Warmwasserstrom mittels einer Mischbatterie gemischt und von dort zu einem Auslauf geleitet.

Zur Erhöhung der Funktionalität ist beispielsweise aus der DE 10 2013 000 773 A1 oder der DE 10 2013 002 236 A1 eine Sanitärarmaturvorrichtung bekannt geworden mit zumindest einem ersten Betätigungselement zur Temperatur- und/oder Mengeneinstellung von Mischwasser und mit einem zweiten Betätigungselement zur Mengeneinstellung von Heißwasser. Mischwasser und Heißwasser werden hierbei über einen gemeinsamen Auslass im Auslauf der Armatur ausgegeben.

Die Bereitstellung des Heißwassers wird üblicherweise in einem Boiler oder dergleichen vorgenommen, der auf Grund seines Bauraums in einem Unterschrank angeordnet werden muss. Hierdurch resultiert eine große Länge der Leitung vom Boiler bis zum Auslass der Sanitärarmatur. Soll zusätzlich neben dem Heißwasser noch Wasser mit einer anderen Aufbereitungsart, beispielsweise gefiltertes Wasser, ausgegeben werden, ist problematisch, dass zum einen die elektrische Leistung, die für die unterschiedlichen Komponenten bereitgestellt werden muss, hoch ist und dies gegebenenfalls bei Zusammenspiel verschiedener elektrischer Verbraucher zu einer Überlastung der üblicherweise mit 16A abgesicherten elektrischen Leitung einer Hausinstallation führt. Weiter ist die Anzahl der verfügbaren Steckdosen im Bereich einer Sanitärarmatur regelmäßig äußerst beschränkt. Mehrere elektrische Verbraucher werden dann üblicherweise über Mehrfachsteckdosen angeschlossen, was den zur Verfügung stehenden Bauraum im Unterschrank weiter verkleinert. Ebenso ist problematisch, dass auf Grund der Vielzahl der Verbraucher, entsprechende Einrichtungen, wie beispielsweise ein Boiler, ggf. nicht mit optimaler Leistung betrieben werden können. Dies bedingt wiederum einen erhöhten Bauraum, da mehr Wasser mit einer hohen Temperatur bevorratet werden muss und nicht instantan erzeugt werden kann. Gleichzeitig ist die Wasserverteilung auf die einzelnen Komponenten und die Zuführung des aufbereiteten Wassers auf Grund des üblicherweise vorhandenen beschränkten Bauraums ebenfalls aufwendig und kompliziert.

Aus der EP 0 766 048 A1 ist eine haustechnische Einrichtung mit einem Elektrohauptverteiler und eine Einheit zum Steuern der haustechnischen Einheit gezeigt. Nachteilig dabei ist, dass eine derartige Einrichtung einen großen Bauraum beansprucht und zudem keinerlei weitere Wasseraufbereitungsarten ermöglicht.

Aus der US 2020/0277768 A1 ist ein Sanitärmöbel mit integrierter Spüle gezeigt, welches einen modularen Aufbau aufweist und neben einer Wassereinlassverbindung auch eine Filtereinheit und eine elektrische Verbindung bereitstellt. Nachteilig dabei ist, dass die Anzahl der elektrischen Verbindungen äußerst begrenzt ist. Außerdem ist auch die Funktionalität hinsichtlich der Bereitstellung von aufbereitetem Wasser beschränkt, da lediglich eine Filtereinrichtung vorhanden ist.

Eine Aufgabe der vorliegenden Erfindung ist es daher, eine Sanitärarmaturvorrichtung sowie ein Sanitärsystem bereitzustellen, welches zum einen, einen flexiblen Einsatz mehrerer unterschiedlicher Fluidaufbereitungskomponenten ermöglicht bei gleichzeitig effizientem Betrieb bei hoher Sicherheit und Zuverlässigkeit. Eine weitere Aufgabe der vorliegenden Erfindung ist es, eine alternative Sanitärarmaturvorrichtung sowie ein alternatives Sanitärsystem bereitzustellen.

In einer Ausführungsform löst die vorliegende Erfindung die vorstehend genannten Aufgaben durch eine Sanitärarmaturvorrichtung, umfassend
eine Sanitärarmatur zur Abgabe eines Fluids,
eine Aufbereitungseinrichtung zum Bereitstellen von zumindest einer Art aufbereiteten Fluids, wobei die Aufbereitungseinrichtung ein oder mehrere Aufbereitungskomponenten aufweist, und
eine zentrale Verteilungseinrichtung, welche zumindest mit der Aufbereitungseinrichtung verbunden ist, umfassend
eine Energieverteilungskomponente, welche ausgebildet ist, elektrische Energie für zumindest eine Aufbereitungskomponente der Aufbereitungseinrichtung bereitzustellen und wobei die Verteilungseinrichtung ausgebildet ist, die elektrische Gesamtleistung der gesamten mittels der zentralen Verteilungseinrichtung abgegebenen elektrischen Energie unterhalb einer vorgegebenen maximalen Gesamtleistung zu regeln und/oder
eine Fluidverteilungskomponente zur Verteilung von Fluid an zumindest eine der Aufbereitungskomponenten der Aufbereitungseinrichtung.

In einer weiteren Ausführungsform löst die vorliegende Erfindung die vorstehend genannten Aufgaben durch ein Sanitärsystem mit einer Sanitärarmaturvorrichtung gemäß einem der Ansprüche 1-12, umfassend ein Sanitärmöbel mit einem oberen und einem unteren Bereich, wobei ein Auslauf und/oder Bedienelemente der Sanitärarmatur im oberen Bereich und die Aufbereitungseinrichtung und insbesondere eine Mischwassereinrichtung im unteren Bereich angeordnet sind.

In einer weiteren Ausführungsform löst die vorliegende Erfindung die vorstehend genannten Aufgaben durch ein Verfahren zum Betreiben einer Sanitärarmaturvorrichtung gemäß einem der Ansprüche 1-12, umfassend die Schritte
- Bereitstellen von elektrischer Leistung für zumindest eine der Aufbereitungskomponenten der Aufbereitungseinrichtung,
- Messen der elektrischen Leistung, die zumindest eine Aufbereitungskomponente erhält,
- Überprüfen, ob die die elektrische Gesamtleistung der gesamten mittels der zentralen Verteilungseinrichtung abgegebenen elektrischen Energie unterhalb einer vorgegebenen maximalen Gesamtleistung liegt, und
- Wenn nein, Anpassen der durch die Verteilungseinrichtung der zumindest einen Aufbereitungseinrichtung bereitgestellten Leistung derart, sodass die vorgegebene Gesamtleistung nicht überschritten wird und/oder
- Wenn ja, Zuweisen von mehr elektrischer Leistung für die zumindest eine Aufbereitungskomponente, sofern diese in einem vorgegebenen Leistungsintervall variiert werden kann, auf Anforderung einer Anforderungseinrichtung.

Einer der damit erzielten Vorteile ist, dass damit der Einbauraum insgesamt besser genutzt werden kann, da separate Netzteile für die Komponenten beziehungsweise für die Einrichtungen, die mit der Verteilungseinrichtung verbunden sind, entfallen können. Ein weiterer möglicher Vorteil ist, dass der Aufwand für die Verkabelung insgesamt gesenkt werden wann. Ein weiterer möglicher Vorteil ist, dass eine Netzleitung, mit der die Verteilungseinrichtung verbunden ist, nicht überlastet wird, so dass ein zuverlässiger Betrieb aller Einrichtungen beziehungsweise Komponenten ermöglicht wird.

Der Begriff "aufbereitetes Fluid" ist im weitesten Sinne zu verstehen und bezieht sich insbesondere in den Ansprüchen, vorzugsweise in der Beschreibung auf Fluide, insbesondere Flüssigkeiten, vorzugsweise Wasser in Form von Leitungswasser von einem Wasserversorger oder dergleichen, welches durch eine separate Einrichtung zusätzlich in seinen Eigenschaften und/oder in seiner Zusammensetzung und/oder Aufbereitungsart verändert wird. So kann beispielsweise aufbereitetes Wasser eine hohe Temperatur, sogenanntes Heißwasser mit einer Temperatur von mehr als 80 Grad Celsius, einen anderen Karbonisierungsgrad, eine teilweise andere Zusammensetzung oder dergleichen als vom Wasserversorger ursprünglich bereitgestelltes Wasser aufweisen. Unter dem Begriff "aufbereitetes Fluid" ist insbesondere kein Warm- oder Kaltwasser beziehungsweise Mischwasser zu verstehen, welches üblicherweise von einem Wasserversorger einem Einfamilienhaus oder Mehrfamilienhaus durch einen Hausanschluss oder dergleichen bereitgestellt wird und über eine Heizung oder dergleichen in seiner Temperatur gegebenenfalls angepasst ist.

Der Begriff "Aufbereitungsart" ist im weitesten Sinne zu verstehen und bezieht sich insbesondere in den Ansprüchen, vorzugsweise in der Beschreibung nicht nur auf die grundlegende Art der Aufbereitung eines Fluids, insbesondere einer Flüssigkeit, beispielsweise ob das Wasser karbonisiert wurde oder nicht, sondern auch auf den Grad, die Intensität oder die Konzentration der Aufbereitung, beispielsweise die Intensität der Karbonisierung. Unter unterschiedlichen Aufbereitungsarten sind damit beispielsweise unterschiedliche Karbonisierungsgrade zu verstehen, beispielsweise "still", "medium" oder "classic". Unter unterschiedlichen Aufbereitungsarten sind auch beispielsweise unterschiedliche Temperaturen von Heißwasser, unterschiedlich stark gefiltertes Wasser, unterschiedliche Konzentrationen von Geschmackszusätzen beziehungsweise Aromatisierungen, beispielsweise mittels Granulat für Kaffee, Tee oder dergleichen, unterschiedliche Aufmineralisierungsarten und unterschiedliche Konzentrationen derselben Aufmineralisierungsart oder dergleichen zu verstehen. Unter den Begriff "Aufbereitungsart" fällt insbesondere auch ein "Nichtaufbereiten". Darüber hinaus ist unter "Aufbereitungsart" auch eine Desinfizierung und/oder Entkeimung eines Fluids zu verstehen, sodass ein hygienisch aufbereitetes Fluid bereitgestellt wird.

Der Begriff "Fluidaufbereitungseinrichtung" oder "Aufbereitungseinrichtung" ist im weitesten Sinne zu verstehen und bezieht sich, insbesondere in den Ansprüchen, vorzugsweise in der Beschreibung nicht nur auf die Bereitstellung eines aufbereiteten Fluids, sondern umfasst ebenfalls auch die Bereitstellung separater Fluide, wie beispielsweise eine Vorratseinrichtung zur Bereitstellung eines flüssigen oder gasförmigen Desinfektionsmittels oder dergleichen.

Der Begriff "Sanitärmöbel" ist im weitesten Sinne zu verstehen und bezieht sich, insbesondere in den Ansprüchen, vorzugsweise in der Beschreibung nicht nur auf ein freistehendes Möbelstück oder dergleichen, sondern umfasst insbesondere auch Unterschränke, Oberschränke oder Teile hiervon.

Der Begriff "Fluid" umfasst sowohl gasförmige Stoffe als auch flüssige Stoffe, sowie auch Kombinationen hiervon.

Weitere Merkmale, Vorteile und weitere Ausführungsformen der Erfindung sind im Folgenden beschrieben oder werden dadurch offenbar.

Gemäß einer Weiterbildung ist die Verteilungseinrichtung ausgebildet, die von der jeweiligen Aufbereitungskomponente der Aufbereitungseinrichtung erhaltene elektrische Leistung zu messen und die individuelle elektrische Leistung für jede Aufbereitungskomponente in einem vorgebbaren individuellen Leistungsintervall zu regeln. Damit kann eine individuell zur Verfügung stehende Leistung optimal den jeweiligen Komponenten bereitgestellt werden beziehungsweise eine Vielzahl möglicher Komponenten an der Verteilungseinrichtung betrieben werden.

Gemäß einer Weiterbildung ist die Verteilungseinrichtung ausgebildet, die Leistung auf Anforderung einer Anforderungseinrichtung bis zur oberen Grenze des Leistungsintervalls für eine vorgebbare Zeit für eine an der Verteilungseinrichtung angeschlossenen Einrichtung und/oder für eine oder mehrere der Aufbereitungskomponenten, deren individuelle Leistungsaufnahme in einem vorgegebenen Leistungsintervall variiert werden kann, zu regeln. Damit kann eine Performance-Steigerung einzelner Komponenten beziehungsweise Einrichtungen ermöglicht werden, indem diese - wenn diese für eine höhere Leistung ausgelegt sind - entsprechend mit höherer Leistung - zumindest für eine bestimmte Zeit - betrieben werden können. Die Formulierung "auf Anforderung" ist im weitesten Sinne zu verstehen und bedeutet beispielsweise, dass ein Benutzer Heißwasser zapfen möchte, beispielsweise durch Drücken eines vorhandenen entsprechenden Knopfs, Bedienung einer Benutzerschnittstelle oder dergleichen. Die Formulierung bedeutet ebenfalls, dass die entsprechende Durchführung einer Funktion auf Anforderung erfolgt, wenn ein bestimmter Zustand der Sanitärarmaturvorrichtung gegeben ist: Beispielsweise wird eine Spülfunktion mit Heißwasser oder dergleichen durchgeführt, wenn zuvor Wasser mit Geschmacks- oder Zusatzstoffen ausgegeben wurde.

Gemäß einer Weiterbildung weist die Verteilungseinrichtung zumindest eine Kommunikationsschnittstelle auf, die zum Abfragen und/oder Erhalten von Betriebsinformationen, insbesondere umfassend Leistungsinformationen, von der Aufbereitungseinrichtung, insbesondere individuell von den jeweiligen Aufbereitungskomponenten ausgebildet ist. Damit können der Verteilungseinrichtung im laufenden Betrieb der jeweiligen Aufbereitungskomponente beziehungsweise der Einrichtung Betriebs- oder Statusinformationen zur Verfügung gestellt werden, was beispielsweise die Erkennung eines fehlerhaften Betriebszustands oder dergleichen ermöglicht.

Gemäß einer Weiterbildung sind die Verteilungseinrichtung und zumindest die Aufbereitungsvorrichtung zur bidirektionalen Kommunikation miteinander ausgebildet. Ein möglicher Vorteil hiervon ist, dass ein besonders zuverlässiger Betrieb ermöglicht wird, indem beispielsweise die Verteilungseinrichtung den Betriebszustand der Aufbereitungseinrichtung überprüfen kann. Umgekehrt kann die Komponente beziehungsweise die entsprechende Einrichtung Informationen beispielsweise über die zur Verfügung stehende Leistung von der Verteilungseinrichtung erhalten oder auch entsprechende Informationen für den Betrieb anfordern.

Gemäß einer Weiterbildung ist die Kommunikationsschnittstelle als BUS-Schnittstelle oder als Luftschnittstelle ausgebildet. Damit kann nicht nur eine direkte Kommunikationsverbindung zwischen einer Einrichtung und der Verteilungseinrichtung ermöglicht werden, sondern auch eine indirekte, indem beispielsweise eine Heißwassereinrichtung mit der Verteilungseinrichtung über eine Filtereinrichtung, wobei letztere direkt mit der Verteilungseinrichtung zur Kommunikation verbunden ist, verbunden werden. Insgesamt wird der Verkabelungsaufwand reduziert beziehungsweise die Installation der Einrichtung beziehungsweise der Aufbereitungskomponente zur Kommunikation mit der Verteilungseinrichtung erleichtert.

Gemäß einer Weiterbildung weist die Verteilungseinrichtung eine zweite Kommunikationsschnittstelle zur Anbindung der Sanitärarmaturvorrichtung an ein externes Steuer-/Regelsystem auf. Einer der damit möglichen Vorteile ist eine erhöhte Flexibilität bei der Steuerung/Regelung der Sanitärarmaturvorrichtung und eine verbesserte Nutzerwahrnehmung - User Experience.

Gemäß einer Weiterbildung ist die Verteilungseinrichtung ausgebildet, zumindest zwei unterschiedliche elektrische Spannungen an unterschiedlichen Ausgängen zur Bereitstellung elektrischer Energie bereitzustellen. Einer der damit möglichen Vorteile ist eine erhöhte Flexibilität bei der Auswahl an möglichen, an die Verteilungseinrichtung anzuschließenden Komponenten beziehungsweise Einrichtungen.

Gemäß einer Weiterbildung ist zumindest eine weitere Einrichtung angeordnet, welche mit der Verteilungseinrichtung zur Bereitstellung elektrischer Energie verbunden ist und welche keine Kommunikationsverbindung zur Verteilungseinrichtung aufweist.

Einer der damit möglichen Vorteile ist eine erhöhte Flexibilität bei der Auswahl an möglichen, an die Verteilungseinrichtung anzuschließenden Komponenten.

Gemäß einer Weiterbildung umfasst die Aufbereitungseinrichtung zumindest eine der folgenden Einrichtungen:
- eine Filtereinrichtung zur Bereitstellung eines gefilterten Fluids, insbesondere von gefiltertem Wasser,
- eine Karbonisierungseinrichtung zur Bereitstellung eines karbonisierten Fluids, insbesondere von karbonisiertem Wasser,
- eine Erwärm- und/oder Heizeinrichtung zur Bereitstellung von Fluiden mit hoher Temperatur, insbesondere Heißwasser,
- eine Kühleinrichtung, insbesondere zur Bereitstellung eines gekühlten Fluids, insbesondere Wasser,
- eine Ionisationseinrichtung zur Ionisierung eines Fluids, insbesondere von Wasser,
- eine Anreichungseinrichtung zur Anreichung des Fluids mit zumindest einem Stoff, insbesondere Mineralstoff, Geschmacksstoff, Farbstoff oder dergleichen,
- eine Zusatzeinrichtung zum Zusatz von Konzentraten, insbesondere Fruchtsaftkonzentraten oder dergleichen, zu einem Fluid,
- eine Hygieneeinrichtung zur Bereitstellung von hygienisch aufbereitetem Fluid, insbesondere zur Entkeimung eines Fluids, und/oder
- eine Reinigungseinrichtung zum Bereitstellen eines Reinigungs- und/oder Spülmediums anstelle oder zum Zusetzen zu einem Fluid.

Die Hygieneeinrichtung kann dabei beispielsweise eine Bestrahlungseinrichtung zur Bereitstellung von UV-Licht oder ähnlichem aufweisen. Damit kann eine Vielzahl an möglichen Aufbereitungsarten für Fluide, insbesondere von Wasser, zur Verfügung gestellt werden. Ebenso können diese bevorratet werden, sodass eine schnellere Abgabe bei erneuter Auswahl des jeweiligen aufbereiteten Fluids ermöglicht wird.

Gemäß einer Weiterbildung sind die Erwärm- und/oder Heizeinrichtung und/oder die Kühleinrichtung und/oder die Hygieneeinrichtung jeweils in einem vorgegebenen Leistungsintervall betreibbar. Einer der damit möglichen Vorteile ist eine flexible Steuerung beziehungsweise Energieversorgung nach Bedarf: Wird beispielsweise von einem Nutzer Heißwasser zum Zapfen angefordert, kann der Heizeinrichtung kurzzeitig eine erhöhte Leistung bereitgestellt werden, um entsprechend Heißwasser in größerer Menge ausgeben zu können. Die Heizeinrichtung beziehungsweise der Boiler kann dann entsprechend kleiner dimensioniert werden.

Gemäß einer Weiterbildung sind die Verteilungseinrichtung und zumindest die Aufbereitungseinrichtung zur insbesondere verschlüsselten Kommunikation drahtgebunden oder drahtlos miteinander verbunden. Ein möglicher Vorteil hiervon ist, dass anzuschließende Einrichtungen auf flexible Weise mit der Verteilungseinrichtung zur Kommunikation verbunden werden können. Erfolgt die Kommunikation verschlüsselt, wird die Sicherheit gegenüber möglichen Manipulationen erhöht.

Gemäß einer Weiterbildung des Sanitärsystems ist die zentrale Verteilungseinrichtung im unteren Bereich in der Mitte und benachbart zum oberen Bereich angeordnet. Ein möglicher Vorteil ist eine einfache Zugänglichkeit und eine einfache Montage der weiteren Einrichtungen.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen
- Figur 1: ein Wasserverlaufsdiagramm eines Sanitärsystems gemäß einer Ausführungsform der vorliegenden Erfindung;
- Figur 2: ein Diagramm der elektrischen Verbindungen des Sanitärsystems gemäß Figur 1;
- Figur 3: ein Sanitärarmatursystem in schematischer Darstellung gemäß einer Ausführungsform der vorliegenden Erfindung; und
- Figur 4: Schritte eines Verfahrens in schematischer Darstellung gemäß einer Ausführungsform der vorliegenden Erfindung.

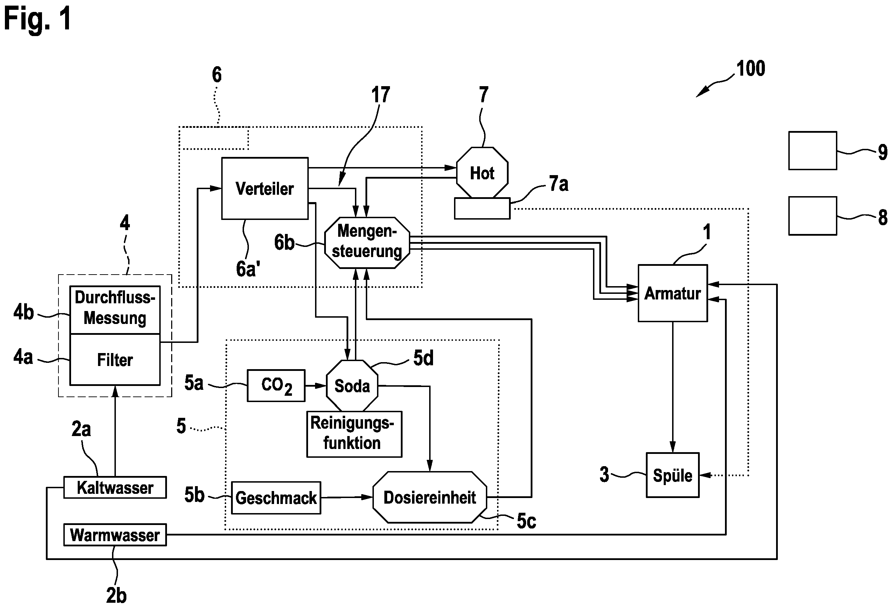

Figur 1 zeigt ein Wasserverlaufsdiagramm eines Sanitärsystems gemäß einer Ausführungsform der vorliegenden Erfindung.

Im Detail zeigt Figur 1 ein Sanitärsystem 100. Das Sanitärsystem 100 umfasst eine Armatur 1 zur Wasserausgabe in eine Spüle 3. Das Sanitärsystem 100 umfasst weiterhin einen Kaltwasseranschluss 2a und einen Warmwasseranschluss 2b, einerseits um Mischwasser über die Armatur 1, die eine Mischwasserbatterie aufweist, ausgeben zu können, andererseits ist der Kaltwasseranschluss 2a zusätzlich mit einer Filtereinrichtung 4, umfassend einen Filter 4a und eine Durchflussmesseinrichtung 4b, verbunden. Der Filter 4a dient zur Filterung des Kaltwassers beispielsweise hinsichtlich Verunreinigungen oder dergleichen. Die Durchflussmesseinrichtung 4b dient dazu, den Durchsatz von gefiltertem Wasser zu messen und bei Überschreiten eines vorgegebenen Wertes dann einen Filterwechsel anzuzeigen. Die Filtereinrichtung 4 ist stromabwärts mit einer Verteilungseinrichtung 6 verbunden, umfassend einen Wasserverteiler 6a`, der mit einer Geschmackseinrichtung 5 zum Zusatz von Geschmackskonzentraten und einer Heißwassereinrichtung 7 zur Bereitstellung von Heißwasser getrennt verbunden ist. Die Geschmackseinrichtung 5 umfasst eine CO₂-Kartusche 5a, eine Soda-Komponente 5d mit Reinigungsfunktion, welche mit einer Dosiereinheit 5c verbunden ist, und eine Geschmackszusatzkomponente 5b, welche ebenfalls mit der Dosiereinheit 5c verbunden ist. Die Dosiereinheit 5c und auch die Soda-Komponente 5d sind wiederum mit einer Mengensteuerungseinheit 6b der Verteilungseinrichtung 6 verbunden. Die Geschmackseinrichtung 5 umfasst hier neben der eigentlichen Geschmackszusatzkomponente 5b mit Dosiereinheit 5c auch die Soda-Komponente 5d samt CO₂-Kartusche 5a. Diese können jedoch auch getrennt voneinander in separaten Einrichtungen angeordnet sein.

Die Heißwassereinrichtung 7 umfasst ein Sicherheitsventil 7a, welches bei entsprechendem hohen Druck selbsttätig öffnet und eine direkte Verbindung zur Spüle 3 herstellt. Damit werden Beschädigungen an der Heißwassereinrichtung 7 vermieden. Die Heißwassereinrichtung 7 ist ebenfalls mit der Mengensteuerungseinheit 6b verbunden. Die Mengensteuerungseinheit 6b steuert in Abhängigkeit von Nutzervorgaben, beispielsweise durch eine Benutzerschnittstelle 9, die Abgabe von aufbereitetem Wasser, also hier Soda, gefiltertes Wasser, Wasser mit Geschmack oder Heißwasser und ist dafür mit der Armatur 1 fluidisch über ein oder mehrere Leitungen verbunden.

Optional kann - wie in Figur 1, Bezugszeichen 17 dargestellt - auch eine direkte Fluidverbindung von Verteiler 6a` zur Mengensteuerungseinheit 6b erfolgen, um ohne Umweg über die Geschmackseinrichtung 5 gefiltertes Wasser ausgeben zu können.

Nicht eingebunden in das Wasserverlaufsdiagramm sind einerseits die bereits genannte Nutzerschnittstelle 9 sowie ein zusätzlicher elektrischer Verbraucher 8, wie beispielsweise ein elektrisch betätigbarer Abfalleimer, ein elektrisch betreibbarer Zerkleinerer, eine Spülmaschine, eine Geruchsunterdrückungseinrichtung oder dergleichen.

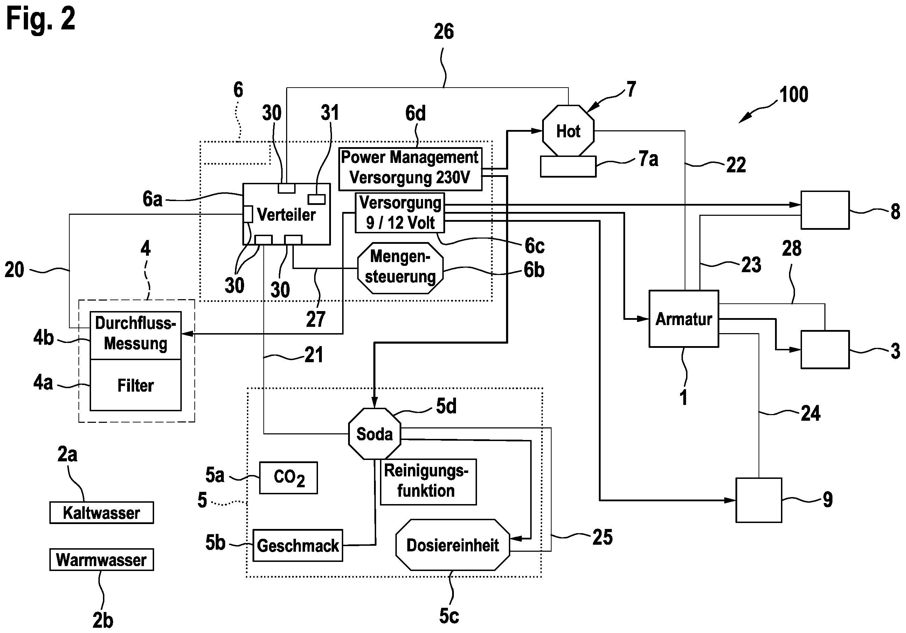

Figur 2 zeigt ein Diagramm der elektrischen Verbindungen des Sanitärsystems gemäß Figur 1. Im Detail zeigt Figur 2 das Sanitärsystem 100 gemäß Figur 1 mit den jeweiligen Komponenten. Nicht eingebunden in das Diagramm der Figur 2 sind der Kaltwasseranschluss 2a und der Heißwasseranschluss 2b, da diese nicht mit elektrischer Energie versorgt werden müssen.

Die Verteilungseinrichtung 6 umfasst hier einen elektrischen Verteiler 6a, der zur Bereitstellung von elektrischer Energie ausgebildet ist. Hierzu weist die Verteilungseinrichtung 6 einerseits eine Hochvolt-Schnittstelle 6d zur Bereitstellung von elektrischer Energie mit einer Spannung von 230V auf und andererseits eine Niedrigvoltschnittstelle 6c zur Bereitstellung von elektrischer Energie mit einer Spannung von 9 und/oder 12 und/oder 24 Volt oder dergleichen.

Weiterhin umfasst die Verteilungseinrichtung 6 ein oder mehrere Kommunikationsschnittstellen 30 zur Kommunikation der Verteilungseinrichtung 6 mit der Heißwassereinrichtung 7, der Geschmackseinrichtung 5, der Durchflussmesseinrichtung 4b, der Filtereinrichtung 4 und der Mengensteuerungseinheit 6b über Verbindungen 26, 21, 20, 27. Die Kommunikation erfolgt hierbei basierend auf einem BUS-System, sodass auch eine Einrichtung über ein oder mehrere weitere Einrichtungen, die mit der Verteilungseinrichtung 6 verbunden ist, mit der Verteilungseinrichtung 6 verbunden werden kann. In Figur 2 betrifft dies die Armatur 1, die über die Heißwassereinrichtung 7 mit der Verteilungseinrichtung 6 verbunden ist, Bezugszeichen 22. Mit der Armatur 1 sind wiederum die Benutzerschnittstelle 9, Verbindung 24, die Spüle 3, Verbindung 28 sowie der zusätzliche elektrische Verbraucher 8, Verbindung 23, zur Kommunikation mit der Verteilungseinrichtung 6 verbunden. In der Geschmackseinrichtung 5 sind wiederum die Geschmackszusatzkomponente 5b mit der Soda-Komponente 5d zur Kommunikation, Bezugszeichen 21 verbunden, wobei dieses wiederum mit der Dosiereinheit 5c zur Kommunikation, Bezugszeichen 25, verbunden ist.

Mit der Hochvoltschnittstelle 6d der Verteilungseinrichtung 6 sind die Heißwassereinrichtung 7 und die Geschmackseinrichtung 5, insbesondere die Soda-Komponente 5d verbunden. Die Soda-Komponente 5d stellt wiederum eine Niedrigvoltschnittstelle (nicht gezeigt) zur Energieversorgung der Dosiereinheit 5c bereit.

Mit der Niedrigvoltschnittstelle 6c der Verteilungseinrichtung 6 sind der zusätzliche elektrische Verbraucher 8 und die Armatur 1 und über die Armatur 1 die Spüle 3 verbunden. Direkt mit der Niedrigvoltschnittstelle 6c sind weiterhin die Benutzerschnittstelle 9 und die Durchflussmesseinrichtung 4b der Filtereinrichtung 4 verbunden.

Die Verteilungseinrichtung 6 gemäß Ausführungsformen der Erfindung stellt somit eine zentrale Verteilung von Wasser als auch elektrischer Energie für die angeschlossenen Komponenten, Einrichtungen und zusätzlichen Verbraucher bereit. Ebenso ermöglicht sie eine Überwachung beziehungsweise Steuerung über die entsprechenden Kommunikationsschnittstellen 30. Über eine eigene uni- oder bidirektionale Kommunikationsschnittstelle 31, die vorzugsweise drahtlos ausgebildet ist, ist eine Anbindung der Verteilungseinrichtung 6 in ein externes System beispielsweise im Rahmen einer Heimautomation möglich. Weiterhin kann die Kommunikation über die Kommunikationsschnittstellen 30, 31 - wie ausgeführt drahtlos - und/oder drahtgebunden erfolgen, beispielsweise mittels Bluetooth, WLAN, Power-LAN oder sonstigen Protokollen, Standards oder dergleichen.

Mit anderen Worten stellt die Verteilungseinrichtung 6 elektrische Energie für die Einrichtungen 4, 5, 7 und für die Armatur 1 samt der an diese angeschlossenen Komponenten und Einheiten bereit. Die Versorgung mit elektrischer Energie erfolgt dabei derart, dass die elektrische Gesamtleistung der gesamten mittels der Verteilungseinrichtung 6 abgegebenen elektrischen Energie unterhalb einer vorgegebenen maximalen Gesamtleistung bleibt. So wird vermieden, dass das elektrische Leitungsnetz, bspw. über eine Steckdose eines Hausnetzes, mit dem die Verteilungseinrichtung 6 verbunden ist, überlastet wird. Die Verteilungseinrichtung 6 sorgt somit dafür, dass die maximale abgerufene Leistung - vorgegeben vom elektrischen Leitungsnetz - nicht überschritten wird. Insofern wird vermieden, dass die elektrische Sicherung der jeweiligen Wohneinheit bzw. des Hauses auslöst. Hierbei ist es ebenso möglich, einzelnen Komponenten eine höhere elektrische Leistung zuzuweisen, sodass diese mit einer höheren Performance arbeiten, beispielsweise die Heißwassereinrichtung 7, die mit höheren Leistungswerten schneller eine definierte Wassermenge erwärmen kann. Der jeweilige Boiler für eine vorgegebene Entnahmemenge an Heißwasser kann dann bezüglich des erforderlichen Bauraumes kleiner ausgelegt werden.

Die beteiligten Komponenten beziehungsweise Einrichtungen kommunizieren hierzu mit der Verteilungseinrichtung 6, um einen störungsfreien Betrieb mit geändertem elektrischen Leistungsangebot zu gewährleisten und um zu vermeiden, dass diese dann in einen undefinierten Systemzustand übergehen und/oder einfach "abstürzen".

Allerdings ist es möglich, auch Verbraucher, Einrichtungen oder Komponenten einzubinden, die keine Kommunikation mit der Verteilungseinrichtung 6 benötigen oder bereitstellen können. Diese elektrischen Verbraucher werden von der Verteilungseinrichtung 6 gemäß dem aktuellen Leistungsverbrauch überwacht. Die im Sanitärsystem 100 eingebundenen kommunizierenden Einrichtungen beziehungsweise Komponenten können dann die noch zur Verfügung stehende elektrische Leistung effektiv nutzen. Die Reaktionszeit bei einem direkten Anstieg der erforderlichen Leistung reicht aus, um den Eingriff in die elektrische Summenleistung zu realisieren, ohne dass die jeweilige elektrische Sicherung anspricht. Kurzzeitige Leistungsspitzen werden somit ohne Netzunterbrechung gepuffert. Die in einer Hausinstallation vorgesehenen Sicherungen sind in der Regel träge genug, dass ausreichend Zeit für eine Leistungsreduzierung von einzelnen Komponenten und Einrichtungen verbleibt und keine Sicherung ausgelöst wird.

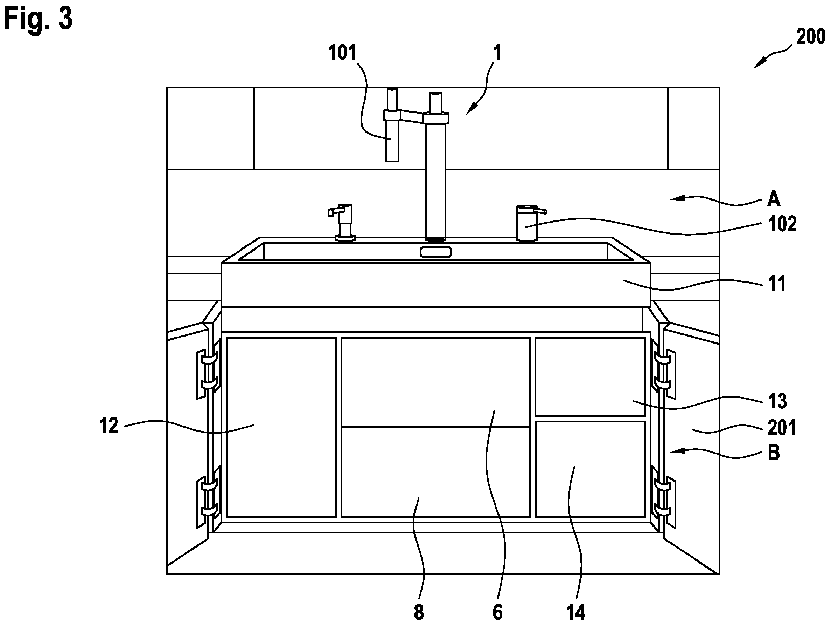

Figur 3 zeigt ein Sanitärarmatursystem in schematischer Darstellung gemäß einer Ausführungsform der vorliegenden Erfindung.

In Figur 3 ist ein Sanitärarmatursystem 200 umfassend ein Spülbecken 11 mit einer Armatur 1 mit Auslass 101 und Bedienelementen 102 gezeigt. Diese sind oberhalb (Bezugszeichen A) eines Schranks 201 mit Arbeitsplatte angeordnet. Im unteren Bereich B, also unterhalb der Küchenarbeitsplatte sind schematisch auf der linken Seite Wasseranschlüsse und -verrohrung 12 angeordnet dargestellt. In der Mitte oben ist die elektrische Verkabelung samt Verteilungseinrichtung 6 angeordnet, darunter ist ein Abfalleimer 8 angeordnet. Rechts daneben sind unten Wasseraufbereitungsmodule 14, beispielsweise für die Bereitstellung von heißem Wasser, Soda und dergleichen, angeordnet, darüber Anschlüsse und Verkabelung 13 für die genannten Module. Die in Figur 3 schematisch gezeigte Aufteilung im unteren Bereich B kann auch anders vorgenommen werden. Allgemein können in einer Ausführungsform der vorliegenden Erfindung ein oder mehrere der Komponenten, Einrichtungen, Verbraucher oder dergleichen als Module ausgebildet sein, die aneinander und/oder an einem Rahmen und/oder an dem Schrank 201 insbesondere lösbar festlegbar sind. Die Module oder Teile hiervon können austauschbar angeordnet oder ausgebildet werden.

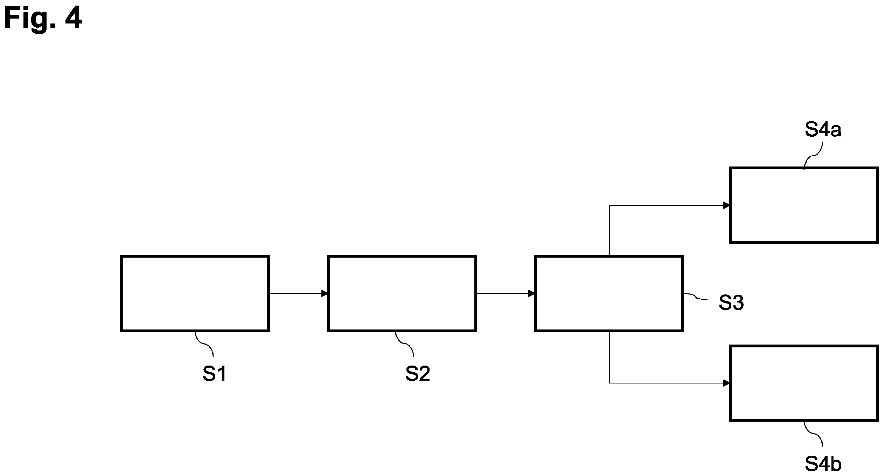

Figur 4 zeigt Schritte eines Verfahrens in schematischer Darstellung gemäß einer Ausführungsform der vorliegenden Erfindung.

Im Detail zeigt Figur 4 Schritte eines Verfahrens zum Betreiben einer Sanitärarmaturvorrichtung gemäß einem der Ansprüche 1-12. Hierbei werden die folgenden Schritte durchgeführt:
- Bereitstellen S1 von elektrischer Leistung für zumindest eine der der Aufbereitungskomponenten der Aufbereitungseinrichtung,
- Messen S2 der elektrischen Leistung, die zumindest eine Aufbereitungskomponente erhält,
- Überprüfen S3, ob die die elektrische Gesamtleistung der gesamten mittels der zentralen Verteilungseinrichtung abgegebenen elektrischen Energie unterhalb einer vorgegebenen maximalen Gesamtleistung liegt, und
- Wenn nein, Anpassen S4a der durch die Verteilungseinrichtung der zumindest einen Aufbereitungseinrichtung bereitgestellten Leistung derart, sodass die vorgegebene Gesamtleistung nicht überschritten wird und/oder
- Wenn ja, Zuweisen S4b von mehr elektrischer Leistung für die zumindest eine Aufbereitungskomponente, sofern diese in einem vorgegebenen Leistungsintervall variiert werden kann, auf Anforderung einer Anforderungseinrichtung.

Zusammenfassend stellt die vorliegende Erfindung zumindest eines der folgenden Merkmale und/oder zumindest einen der folgenden Vorteile bereit:
- Zentrale Energieversorgung.
- Geringerer Verkabelungsaufwand.
- Zuverlässigerer Betrieb beziehungsweise zuverlässigere Steuerung.
- Geringerer Bauraum von Einzelkomponenten.
- Flexible Steuerung.
- Flexibler Einsatz unterschiedlicher Komponenten.
- Einfache, kostengünstige Implementierung.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Sanitärarmatur
- 2a, 2b: Kalt-/Warmwasseranschluss Haus
- 3: Spüle
- 4: Filtereinrichtung
- 4a: Filter
- 4b: Durchflussmesseinrichtung
- 5: Aufbereitungseinrichtung
- 5a: CO₂-Kartusche
- 5b: Geschmackszusatzkomponente
- 5c: Dosiereinheit
- 5d: Soda-Komponente
- 6: Verteilungseinrichtung
- 6a: Energieverteilungskomponente
- 6a': Fluidverteilungskomponente
- 6b: Mengensteuerungseinheit
- 6c, 6d: Elektrische Ausgänge
- 7: Heißwassereinrichtung
- 7a: Sicherheitsventil
- 8: Abfalleimer
- 9: Anforderungseinrichtung/Nutzerschnittstelle

- 11: Spülbecken
- 12: Wasseranschluss bzw. -verrohrung
- 13: Verkabelung
- 14: Wasseraufbereitungsmodule
- 17: Fluidverbindung (optional)

- 20: Kommunikationsverbindung
- 21: Kommunikationsverbindung
- 22: Kommunikationsverbindung
- 23: Kommunikationsverbindung
- 24: Kommunikationsverbindung
- 25: Kommunikationsverbindung
- 30: Kommunikationsschnittstelle
- 31: Kommunikationsschnittstelle

- 100: Sanitärarmaturvorrichtung
- 101: Auslauf
- 102: Bedienelement
- 200: Sanitärsystem
- 201: Sanitärmöbel

- A: Oberer Bereich
- B: Unterer Bereich

- S1, S2, S3, S4a, S4b: Verfahrensschritte

## Patentansprüche

1. Sanitärarmaturvorrichtung (100), umfassend
eine Sanitärarmatur (1) zur Abgabe eines Fluids,
eine Aufbereitungseinrichtung (5, 7) zum Bereitstellen von zumindest einer Art aufbereiteten Fluids, wobei die Aufbereitungseinrichtung (5) ein oder mehrere Aufbereitungskomponenten (5a, 5b, 5c, 5d, 7) aufweist, und
eine zentrale Verteilungseinrichtung (6), welche zumindest mit der Aufbereitungseinrichtung (5, 7) verbunden ist, umfassend
eine Fluidverteilungskomponente (6a`) zur Verteilung von Fluid an zumindest eine der Aufbereitungskomponenten (5a, 5b, 5c, 5d, 7) der Aufbereitungseinrichtung (5, 7), insbesondere wobei die zentrale Verteilungseinrichtung (6) ausgebildet ist, die von der jeweiligen Aufbereitungskomponente (5a, 5b, 5c, 5d, 7a) der Aufbereitungseinrichtung (5, 7) erhaltene elektrische Leistung zu messen und die individuelle elektrische Leistung für jede Aufbereitungskomponente (5a, 5b, 5c, 5d, 7) in einem vorgebbaren individuellen Leistungsintervall zu regeln.

2. Sanitärarmaturvorrichtung (100) gemäß Anspruch 1, **dadurch gekennzeichnet, dass** die Verteilungseinrichtung (6) ausgebildet ist, eine Leistung auf Anforderung einer Anforderungseinrichtung (9) bis zur oberen Grenze des Leistungsintervalls für eine vorgebbare Zeit für eine an der Verteilungseinrichtung (6) angeschlossenen Einrichtung (5, 7) und/oder für eines oder mehrere der Aufbereitungskomponenten (5a, 5b, 5c, 5d, 7), deren individuelle Leistungsaufnahme in einem vorgegebenen Leistungsintervall variiert werden kann, zu regeln.

3. Sanitärarmaturvorrichtung (100) gemäß einem der Ansprüche 1-2, **dadurch gekennzeichnet, dass** die Verteilungseinrichtung (6) zumindest eine Kommunikationsschnittstelle (30) aufweist, die zum Abfragen und/oder Erhalten von Betriebsinformationen, insbesondere umfassend Leistungsinformationen, von der Aufbereitungseinrichtung (5, 7), insbesondere individuell von den jeweiligen Aufbereitungskomponenten (5a, 5b, 5c, 5d, 7) ausgebildet ist.

4. Sanitärarmaturvorrichtung gemäß einem der Ansprüche 1-3, **dadurch gekennzeichnet, dass** die Verteilungseinrichtung (6) und zumindest die Aufbereitungsvorrichtung (5, 7) zur bidirektionalen Kommunikation miteinander ausgebildet sind.

5. Sanitärarmaturvorrichtung (100) gemäß Anspruch 3, **dadurch gekennzeichnet, dass** die Kommunikationsschnittstelle (30) als BUS-Schnittstelle oder Luftschnittstelle ausgebildet ist.

6. Sanitärarmaturvorrichtung (100) gemäß einem der Ansprüche 1-5, **dadurch gekennzeichnet, dass** die Verteilungseinrichtung (6) eine Kommunikationsschnittstelle (31) zur Anbindung der Sanitärarmaturvorrichtung (100) an ein externes Steuer-/Regelsystem aufweist.

7. Sanitärarmaturvorrichtung (100) gemäß einem der Ansprüche 1-6, **dadurch gekennzeichnet, dass** die Verteilungseinrichtung (6) ausgebildet ist, zumindest zwei unterschiedliche elektrische Spannungen an unterschiedlichen Ausgängen (6c, 6d) zur Bereitstellung elektrischer Energie bereitzustellen.

8. Sanitärarmaturvorrichtung (100) gemäß einem der Ansprüche 1-7, **dadurch gekennzeichnet, dass** zumindest eine weitere Einrichtung (8) angeordnet ist, welche mit der Verteilungseinrichtung (6) zur Bereitstellung elektrischer Energie verbunden ist und welche keine Kommunikationsverbindung zur Verteilungseinrichtung (6) aufweist.

9. Sanitärarmaturvorrichtung (100) gemäß einem der Ansprüche 1-8, **dadurch gekennzeichnet, dass** die Aufbereitungseinrichtung (5, 7) zumindest eine der folgenden Einrichtungen umfasst:
- eine Filtereinrichtung (4) zur Bereitstellung eines gefilterten Fluids, insbesondere von gefiltertem Wasser,
- eine Karbonisierungseinrichtung (5d) zur Bereitstellung eines karbonisierten Fluids, insbesondere von karbonisiertem Wasser,
- eine Erwärm- und/oder Heizeinrichtung (7) zur Bereitstellung von Fluiden mit hoher Temperatur, insbesondere Heißwasser,
- eine Kühleinrichtung, insbesondere zur Bereitstellung eines gekühlten Fluids, insbesondere Wasser,
- eine Ionisationseinrichtung zur Ionisierung eines Fluids, insbesondere von Wasser,
- eine Anreichungseinrichtung zur Anreichung des Fluids mit zumindest einem Stoff, insbesondere Mineralstoff, Geschmacksstoff, Farbstoff oder dergleichen,
- eine Zusatzeinrichtung (5b, 5c) zum Zusatz von Konzentraten, insbesondere Fruchtsaftkonzentraten oder dergleichen, zu einem Fluid,
- eine Hygieneeinrichtung zur Bereitstellung von hygienisch aufbereitetem Fluid, insbesondere zur Entkeimung eines Fluids, und/oder
- eine Reinigungseinrichtung zum Bereitstellen eines Reinigungs- und/oder Spülmediums anstelle oder zum Zusetzen zu einem Fluid.

10. Sanitärarmaturvorrichtung (100) gemäß Anspruch 2 und 9, **dadurch gekennzeichnet, dass** die Erwärm- und/oder Heizeinrichtung (7) und/oder die Kühleinrichtung und/oder die Hygieneeinrichtung jeweils in einem vorgegebenen Leistungsintervall betreibbar sind.

11. Sanitärarmaturvorrichtung (100) gemäß Anspruch 3, **dadurch gekennzeichnet, dass** die Verteilungseinrichtung (6) und zumindest die Aufbereitungseinrichtung (5, 7) zur insbesondere verschlüsselten Kommunikation drahtgebunden oder drahtlos miteinander verbunden sind.

12. Sanitärarmaturvorrichtung (100) gemäß einem der Ansprüche 1-11, **dadurch gekennzeichnet, dass** eine Energieverteilungskomponente (6a) angeordnet ist, welche ausgebildet ist, elektrische Energie für zumindest eine Aufbereitungskomponente (5a, 5b, 5c, 5d, 7) der Aufbereitungseinrichtung (5, 7) bereitzustellen, und wobei die zentrale Verteilungseinrichtung (6) ausgebildet ist, die elektrische Gesamtleistung der gesamten mittels der zentralen Verteilungseinrichtung (6) abgegebenen elektrischen Energie unterhalb einer vorgegebenen maximalen Gesamtleistung zu regeln.

13. Sanitärsystem (200) mit einer Sanitärarmaturvorrichtung (100) gemäß einem der Ansprüche 1-12, umfassend ein Sanitärmöbel (201) mit einem oberen und einem unteren Bereich (A, B), wobei ein Auslauf und/oder Bedienelemente der Sanitärarmatur (1) im oberen Bereich (A) und die Aufbereitungseinrichtung (5, 7) und insbesondere eine Mischwassereinrichtung (2a, 2b) im unteren Bereich (B) angeordnet sind.

14. Sanitärsystem (200) gemäß Anspruch 13, **dadurch gekennzeichnet, dass** die zentrale Verteileinrichtung (6) im unteren Bereich (B) in der Mitte und benachbart zum oberen Bereich (A) angeordnet ist.

15. Verfahren zum Betreiben einer Sanitärarmaturvorrichtung (100) gemäß einem der Ansprüche 1-12, umfassend die Schritte
- Bereitstellen (S1) von elektrischer Leistung für zumindest eine der Aufbereitungskomponenten (5a, 5b, 5c, 5d, 7) der Aufbereitungseinrichtung (5, 7),
- Messen (S2) der elektrischen Leistung, die zumindest eine Aufbereitungskomponente (5a, 5b, 5c, 5d, 7) erhält,
- Überprüfen (S3), ob die elektrische Gesamtleistung der gesamten mittels der zentralen Verteilungseinrichtung (6) abgegebenen elektrischen Energie unterhalb einer vorgegebenen maximalen Gesamtleistung liegt, und
- Wenn nein, Anpassen (S4a) der durch die Verteilungseinrichtung (6) der zumindest einen Aufbereitungskomponente (5a, 5b, 5c, 5d, 7) bereitgestellten Leistung derart, sodass die vorgegebene Gesamtleistung nicht überschritten wird und
- Wenn ja, Zuweisen (S4b) von mehr elektrischer Leistung für die zumindest eine Aufbereitungskomponente (5a, 5b, 5c, 5d, 7), sofern diese in einem vorgegebenen Leistungsintervall variiert werden kann, auf Anforderung einer Anforderungseinrichtung (9).
